Europäisches Patentamt

European Patent Office

Office européen des brevets

(19)

(11) Numéro de publication: **0 010 528**
**B1**

(12) **FASCICULE DE BREVET EUROPEEN**

(45) Date de publication du fascicule du brevet: **23.06.82**

(51) Int. Cl.³: **B 42 B 5/00**, B 65 G 59/06

(21) Numéro de dépôt: **79830035.6**

(22) Date de dépôt: **02.10.79**

(54) **Appareil pour le prélèvement et l'alimentation de listels métalliques conformés en V.**

(30) Priorité: **13.10.78 IT 2874578**

(43) Date de publication de la demande:
**30.04.80 Bulletin 80/9**

(45) Mention de la délivrance du brevet:
**23.06.82 Bulletin 82/25**

(84) Etats contractants désignés:
**BE CH DE FR GB NL**

(56) Documents cités:
**GB - A - 1 056 050**

(73) Titulaire: **AMIA S.A.S. DI ALLIEVI ADOLFO & C.**
**273/6 Via Gallarate**
**20151 Milan (IT)**

(72) Inventeur: **Allievi, Alberto**
**273/6 Via Gallarate**
**I-20151 Milan (IT)**

(74) Mandataire: **Calvani, Domenico**
**UFFICIO BREVETTI ING. CALVANI, SALVI &**
**VERONELLI 4, Piazza Duca d'Aosta**
**I-20124 Milan (IT)**

Courier Press, Leamington Spa, England.

# Appareil pour le prélèvement et l'alimentation de listels métalliques conformés en V

La présente invention concerne un appareil conçu pour prélever d'abord—à partir d'un paquet ou d'une pile—et pour alimenter ensuite en aval, des listels métalliques individuels conformés en "V", destinés tout spécialement à la retenue ou l'assemblage d'imprimés ou analogues, ces inprimés ou analogues étant insérés dans l'ouverture du V, après quoi le listel est écrasé à l'aide d'une machine spéciale, du type d'une presse.

Dans les machines de pressage pour le conditionnement ou assemblage d'imprimés selon le système mentionné ci-dessus, dans lesquelles une commande provoque la descente d'un organe presseur sur le listel après qu'un opérateur a effectué le placement manuel de ce listel en appui contre des arrêts d'extrémité appropriés, puis l'insertion, également à la main, de l'imprimé ou des imprimés ou analogues dans l'ouverture en V du listel, l'opération qui consiste à arranger le listel au-dessous de l'organe presseur est désavantageuse du point de vue de la productivité, du fait de la perte considérable de temps occasionnée par la procédure de prélèvement des listels individuels d'un emballage usuel de cet article et d'orientation des listels, lorsque ceux-ci sont emballés en vrac. De plus, cette opération, qui demande de transporter les listels individuels, séparés, jusqu'au point de pressage, peut dans certain cas entraîner des risques pour l'opérateur, à moins que des mesures adéquates ne soient prises pour que la descente de l'organe presseur soit interdite tant que l'opérateur a ses doigts placés en dessous.

Pour les raisons ci-dessous, il se pose le problème, très ressenti dans ce secteur de l'industrie, d'automatiser l'opération de prélèvement des listels individuels d'une pile ou paquet de ses articles et celle ultérieure de l'acheminement—des listels vers le point de pressage.

Les difficultés les plus grandes rencontrées pour la solution de ce problème résident essentiellement en ce que les listels étant empaquetés très étroitement serrés entre eux, le décollement du dernier listel demande und certain effort en même temps que la nécessité d'une retenue de l'avant-dernier listel.

En outre, il faut que les listels soient présentés au poste d'aval, en l'occurence la machine de pressage, selon une disposition et orientation bien précise, en vue d'éviter la nécessité de corriger ou ajuster à la main leur position.

On a déjà proposé un appareil que effectue le prélèvement et l'alimentation des listels en utilisant un champ magnétique pour séparer les listels d'avec un paquet ou pile de ces articles. Cependant, le fonctionnement d'un tel appareil n'est satisfaisant que si l'effort nécessaire pour décoller les listels l'un de l'autre est assez faible, c'est-à-dire, lorsque les listels sont largement ouverts et qu'ils affectent une configuration en L. Par conséquent, cet appareil de la technique connue n'est absolument pas en état d'opérer avec les listels en "V" qui rentrent dans le domaine d'application de la présente invention.

Ainsi, le but de la présente invention est de proposer un appareil capable d'affecter d'une manière automatique et fiable lesdites opérations de séparation des listels en "V" d'avec des paquets ou piles de ces listels et, ensuite, le transfert un à un des listels opportunément disposés et orientés, à des postes de traitement d'aval, en particulier, à une mchine de pressage.

L'invention a également pour but de proposer un appareil du type et aux caractéristiques précités, dans lequel lesdites opérations sont réalisées à l'aide de moyens opérateurs mécaniques particulièrement simples et économiques et tels q'ils permettent une adaptation rapide de l'appareil à des listels de formats différents.

D'une manière essentielle, cet appareil selon l'invention comprend: un magasin pour recevoir un paquet ou pile de listels dans laquelle les listels sont emboîtés l'un dans l'autre et disposés avec le sommet du V dirigé vers le bas; une ou plusieures butées de fin de course pour soutenir la pile par le dernier listel d'en bas; une paire de pointes coniques se situant longitudinalement par rapport à l'extrémité des listels et dont l'axe coincide longitudinalement avec le creux ou espacement délimité entre les sommets des dernier et avant-dernier listels; des moyens pour commander des déplacements coordonnés, d'une part de rétraction our recul en position inactive des butées de fin de course, d'autre part d'avancement des pointes entre les listels dernier et avant-dernier jusqu'à obtenir la séparation du dernier listel de la pile tout en assurant le soutènement du reste de la pile; des moyens pour commander des déplacements coordonnés de retour en position active et de retour en position inactive des butées et des pointes respectivement; et des moyens pour prélever le listel ainsi séparé et pour l'acheminer vers des traitements ultérieurs.

Les différentes particularités et caractéristiques de l'invention seront comprises à la lecture de la description suivant d'un de ses modes préféres de mise en oeuvre, illustré à titre d'exemple sur les dessins annexés, dans lesquels:

— La figure 1 est une vue de face, avec arrachements, dudit mode de mise en oeuvre de l'invention.

— La figure 2 en est une vue partielle de côté.

— La figure 3 est une vue en coupe selon un plan perpendiculaire au grand axe des listels, illustrant une rangée de listels empilés à l'intérieur d'un rail de guidage ou glissière de l'appareil selon l'invention, un des listels étant représenté lorsque séparé d'avec la pile.

— La figure 4 représente, en vue de face parteillement en coupe, et en vue d'en haut, un détail des moyens opérateurs qui effectuent la séparation du dernier listel, lesdits moyens étant dans leur position de repos.

— La figure 5 représente, selon des vues correspondantes à celles de figure 4, le détail desdits moyens lors d'une phase intermédiaire de l'opération de décollement d'un listel.

— La figure 6 represente, selon des vues correspondantes à celles des figures 4 et 5, le détail desdits moyens lors d'une phase finale de la séparation d'un listel.

— La figure 7 représente, en vue partielle de côté et en vue partielle d'en haut, les moyens pour recevoir le listel détaché et pour faire ensuite déplacer le listel sur un dispositif alimentateur qui le délivre à une phase opératoire d'aval.

— La figure 8 est une vue partielle de côté illustrant l'appareil dans la position de transfert du listel séparé sur les moyens d'alimentation en aval.

— La figure 9 est une illustration schématique d'un dispositif accessoire pour rendre plus précise et sûre l'operation de séparation des listels.

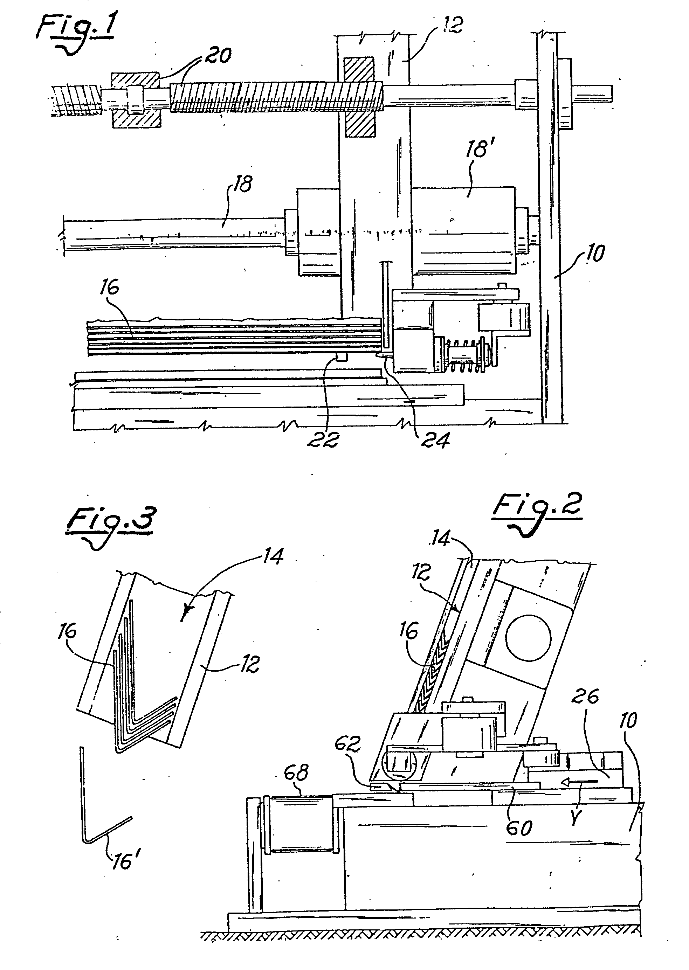

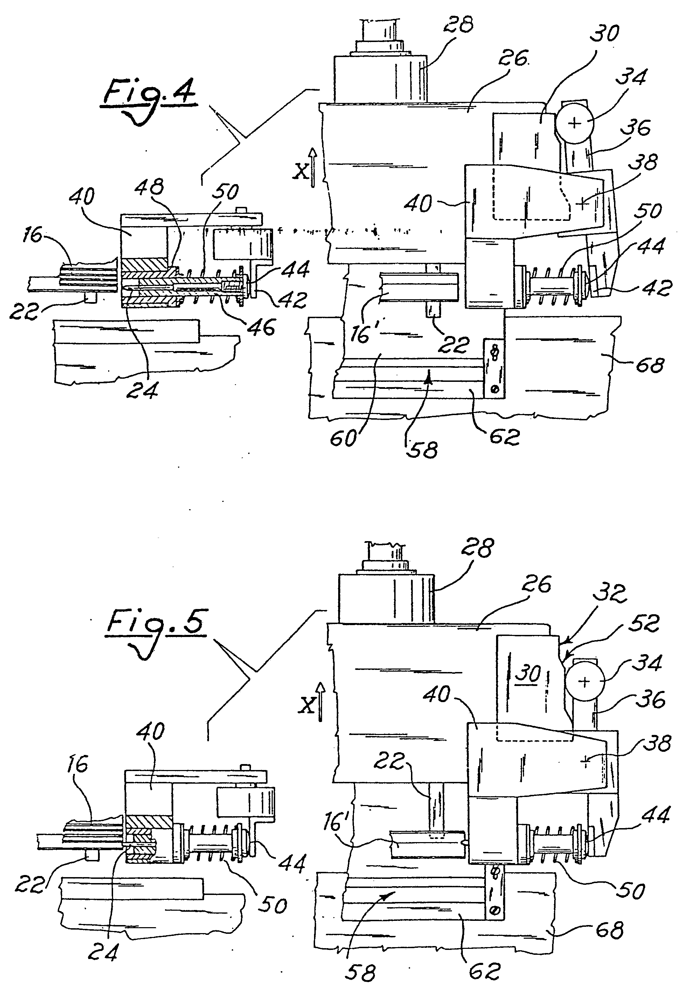

En se rapportant aux dessins, et d'abord aux figures 1 et 2, l'appareil illustré comprend, sur un bâti de support approprié, indiqué généralement par 10 et pouvant être d'une structure convenable quelconque, une pair de rails de guidage ou glissières espacées parallèles 12 (dont une seulement a été représentée sur les dessins), ces glissières délimitant un logement intérieur conformé en "U" 14 (figures 2 et 3) dans lequel sont retenues les extrémités de listels métalliques 16 conformés en "V", ceux-ci étant empilés—c'est-à-dire insérés ou enboîtés l'un dans l'autre—avec les sommets des "V" légèrement espacés en raison de la courbure dérivant de ladite conformation en "V", comme cela est essentiellement illustré à la figure 3. Ces listels peuvent présenter, et présentent en général, une configuration asymétrique selon laquelle une branche du V est plus longue que l'autre, et, à cause de leur conformation, qui délimite un angle tel que figuré sur les dessins ou même plus petit, ces listels sont très étroitement serrés l'un à l'autre, de sorte que pour séparer un listel 16' d'avec la pile de listels 16, il faut qu'une certaine force s'exerce entre ledit listel 16' et le dernier des listels 16 restant dans la pile.

Comme dejà dit, les glissières 12 délimitent des logements 14 conformés en "U" et placés en face l'un de l'autre, dans lesquels logements la pile de listels est libre de glisser vers le bas sous l'effet du poids propre, grâce à une inclinaison appropriées desdites glissières 12, lesquelles, selon l'exemple illustré, ont une disposition sensiblement sub-verticale, mais forment en tout cas un angle différent de O par rapport à la verticale, ce qui permet de garantir l'appui des listels, à tout moment, sur un des côtés du logement 14 et d'avoir ainsi un point de repère fixe pour les jeux du système de séparation des listels, système qui opère avec une grande précision, comme on le verra par la suite. Les glissières 12 sont montées de façon a pouvoir se déplacer dans le sens horizontal sur des supports 18, par l'entremise de coussinets 18' et, cojointement avec les moyens qui commandent la séparation des listels individuels, ces glissières peuvent être ajustées, par exemple au moyen d'un dispositif conventionnel utilisant un écrou 20, pour s'adapter à des listels de longueurs différentes, ce qui confère à la machine, d'une manière avantageuse, une très grande flexibilité d'application.

Ainsi, on insère la pile de listels 16 dans les glissières 12 celles-ci étant convenablement adjustées suivant la longueur des listels et la pile descend par gravité le long desdites glissières jusqu'à venir s'arrêter contre des appuis, ou butées de fin de course 22, lesquels sont avantageusement disposés à proximité des extrémités des listels empilés, de façon à assurer un positionnement exact, dans la direction verticale, desdits listels et, en particulier de celui de ces listels qui est placé en dernier.

L'opération de décollement de ce dernier listel est réalisée, selon l'invention, par des mouvements coordonnés desdites butées de fin de course 22 et d'une paire de pointes coniques 24, lesquelles pénètrent dans le creux ou espacements que délimitent entre eux le dernier et l'avant-dernier des listels de la pile. Grâce à leur conicitè, lesdites pointes, exercent, ainsi, une force tendant à séparer le dernier listel, sur une distance qui est suffisante pour détacher complètement celui-ci du listel placé au-dessus, tout en soutenant le reste de la pile. Pour cela, il est important que les mouvements alternatifs de rétraction et d'insertion des fin de course 22 et des pointes coniques 24, respectivement, soient coordonnés pour que, d'une part, le soutènement de la pile de listels soit assuré a tout moment et que, d'autre part, le listel dont la séparation est en cours soit empêché d'être serré à force entre les pointes 24 et les butées 22, ce que pourrait causer sa déformation. Selon l'invention, cela est obtenu moyennant un asservissement des mouvements des pointes 24 aux mouvements des fin de course 22.

A cette fin les butées de fin de course 22 sont montées sur une plaque coulissante 26, qui est animée d'un mouvement rectiligne alternatif déterminé par un ou plus moyens moteurs 28, constitués, par exemple, par des agrégats cylindre-piston agissant sous l'effet d'une commande, les butées de fin de course 22 étant, en outre, susceptibles de se déplacer longitudinalement, en même temps que les glissières 12, pour garantir à tout moment la presence de ces butées au voisinage des extrémités des listels, comme mentionné plus haut. L'element mobile 26 compote latéralement, d'une manière également ajustable dans la direction horizontale, parallèle au listel, une came 30 dont le profil 32 est parcorur par un galet suiveur de came 34 qui, lui, est monté sur l'extrémité d'un levier 36 pivotant autour d'une axe vertical 38 faisant partie d'un bloc de support 40. Ce bloc est lui-même ajustable dans une direction longitudinale aux listels 16 pour permettre l'adaptation à des listels de longueurs différentes. L'extrémité du levier 36 qui est opposée au rouleau 34 par rapport au pivot 38, a une face 42 qui agit sur la tête arrondie d'une tige 46 mobile axialement dans un coussinet 48 soutenu par le bloc 40 et portant la pointe 24. Ce qu'on vient d'exposer est illustré en particulier aux figures 4, 5 et 6 où l'on peut également noter que la tige 46 est sollicitée par un ressort 50 dans la direction qui fait éloigner la pointe 24 des listels 16 de façon à constamment maintenir le galet 34 en appui sur le profil 32 de la came 30.

La séquence des opération qui amènent au décollement du dernier listel 16' de la pile respective est représentée aux figures 4, 5, 6, dont la première illustre les éléments constituant le dispositif en position de repos, c'est-à-dire avant que les moyens moteurs 28 aient reçu l'ordre pour l'opération de séparation d'un listel et d'acheminement de celui-ci. Pour cette position, les pointes sont retirées et la pile de listels 16 est soutenue par les butées de fin de course 22.

L'ordre étant parvenu aux moyens moteurs 28, ces derniers provoquent un mouvement vers l'arrière de la plaque 26 dans le sens indiqué par X sur la figure, ce qui a pour résultat un recul parteil des appuis 22 et un déplacement du profil 32 de la came 30 par rapport un galet 34 (fig. 5). Ledit profil 32 présente une première partie ascendante 52 qui provoque un déplacement parteil des pointes 24, pour amèner celles-ci à s'insérer exactement dans le creux ou espacement que délimitent entre eux les dernier at avant-dernier listels de la pile, et ce tout en soutenant ladite pile sauf le dernier listel sans toutefois serrer ce dernier listel de force contre les butées 22.

A la suite de la partie ascendante 52, le profil 32 de la came 30 présente un palier 54 parallèle au mouvement de la plaque 26, ce palier 54 déterminant le maintien des pointes 24 dans ladite position partiellement insérée, avec soutènement de la pile de listels à l'exception du dernier au cours d'un mouvement ultérieur de recul des butées 22 au-delà de la position de support du dernier listel 16'. Dans cette condition, le dernier listel de la pile se trouverait être libre de se separer de celle-ci mais il est cependant maintenu en place par la force de frottement importante que détermine la condition d'emboîtement actuel des listels.

Pour réaliser ladite séparation du dernier listel—désormais libéré—le profil 32 de la came 30 présente une autre partie ascendente 56 laquelle, le mouvement de la plaque 26 se poursuivant dans le sens X, détermine un déplacement ultérieur des pointes 24 entre les dernier et avant dernier listels. Grâce à une conformation conique appropriée des pointes 24, ce déplacement oblige le dernier listel 16' de se séparer complètement de la pile pour tomber vers le bas sous l'effet de la force de gravité. Le mouvement de retour—sens opposé—de la plaque 26, provoque une séquence inverse des mouvements qu'on vient de décrire. Au cours de cette séquence inverse, il y a recul partiel des pointes 24, lesquelles assurent cependant également le soutènement de la pile de listels 16, tandis que les butées 22 avancent jusqu'à venir se placer au dessous de ladite pile, après quoi les les pointes 24 sont amenées dans la position inactive de figure 4 et la pile de listels 16 descend d'un petit peu jusqu'à se mettre en appui contre les butées 22, ce qui amène le creux ou espacement entre les dernier et avant-dernier listels à se mettre en ligne avec l'axe des pointes 24, le système étant alors prêt pour une nouvelle opération de décollement.

Pour assurer ledit alignement dans une direction substantiellement horizontale (l'alignement en direction verticale étant assuré par les butées 22), on peut prévoir des dispositifs accessoires, en particulier en forme de doigts 72 (figure 9) qui sont placés en proximité des extremite listels 16, et qui peuvent être actionnés par des moyens d'actionnement (non illustrés) qui à son tour coopérant avec les moyens d'actionnement des pointes 24, comme précédemment décrits. Ces doigts 72 effectuent un mouvement oscillatoire à partir d'une position de répos 72a jusqu'à une position de travail 72 avant le prémier deplacement d'insertion des pointes 24. Ce mouvement des doigts jusqu'à la position 72 déplace les listels en pile et en particulier le dernier listel à partir de sa position de répos 16' a jusqu'à la position 16', comme définie par le côté posterieur des glissières 12, de façon à exactement positionner le creux entre les dernier et avant-dernier listels en alignement axial avec les pointes 24.

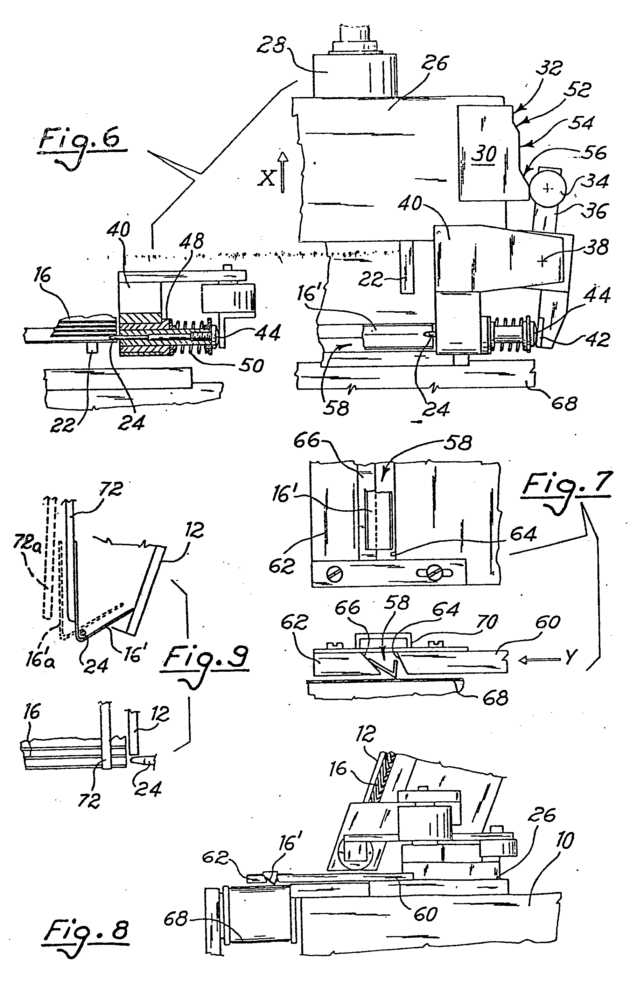

Ainsi détaché, le listel 16' descend jusqu'à un logement 58 de réception de ce listel, ce logement étant délimité par une pair de barres 60, 62 disposées parallèlement au listel et dont les mouvements sont eux-mêmes coordonnés aux mouvements de la plaque principale 26, de sorte que lorsque celle-ci est dans sa position complètement reculée (figure 6), le logement 58 vient se mettre exactement au dessous du, et en ligne avec ledit listel 16', ce logement 58 se trouvant situé, en outre, à un niveau en dessous du niveau des butées d'extrémité 22. Comme particulièrement vu à la figure 7, le logement 58 est délimité par des parois 64, 66 inclinées de haut en bas et en arrière, c'est-à-dire vers la plaque 26, de manière à obliger le listel 16' à prendre une position dèterminée, qui

est en pratique une position d'appui par son côté le plus long, et ce tant au cours de l'insertion du listel dans le logement 58 que lors du déplacement subséquent dudit logement 58— de concert avec les barres 60, 62—déplacement ayant lieu au cours du mouvement de la plaque 26 de retour dans sa condition de repos, illustrée à la figure 4. Ce déplacement détermine une translation due logement 58 dans le sens Y orthogonal au grand axe du listel, juqu'à ce que celui-ci est amené en appui sur un moyen convoyeur d'alimentation, tel par exemple qui la bande transporteuse 68 (figure 8), cette bande déplacement en continu parallèlement au grand axe du listel 16', pour entraîner ce dernier hors du logement de guidage 58, en le faisant passer au-dessous d'un organe de liaison en cavalier 70 (figure 7) qui permet de rendre solidaires les barres 60, 62 l'une de l'autre, sur le côté expulsion ou déchargement du listel 16'.

La bande transporteuse 68, amène ledit listel à un poste de travail d'aval, par exemple une machine de pressage qui comporte, positionné convénablement au-dessus de la bande 68 et an dessous d'un organe presseur, un élément d'arrêt par lequel le listel est retenu pendant le temps qui est nécessaire pour que l'opérateur insère dans celui-ci les imprimés à assembler et ferme le listel sur ces imprimés.

Lorsqu'un accouplement de ce genre est prévu entre l'appareil selon l'invention et une machine à fermer les listels du type susmentionné, il convient d'arranger pour que l'ordre aux moyens moteurs 28 pour la mise en route d'une cycle de séparation d'un listel, soit donné par la machine à fermer les listels en particulier au cours du mouvement de l'organe presseur, de cette machine.

## Revendications

1. Appareil pour prélever d'abord, à partir d'une pile, et alimenter ensuite des listels métalliques (16) individuels, conformés en V, destinés tout spécialement à l'assemblage ou le conditionnement de présentation d'imprimés ou analogues, caractérisé en ce que cet appareil comprend:— un magasin (12) pour recevoir un paquet ou pile de listels (16) emboîtés les uns dans les autres et disposés avec le sommet des V dirigé vers le bas; une ou plus, butées de fin de course (22) assurant le souténement de la pile par le dernier listel d'en bas (16'); une paire de pointes coniques (24), situées longitudinalement par rapport aux listels (16), en regard de l'extrémité de ces derniers, et dont l'axe coincide sensiblement avec le creux ou espacement que délimitent entre eux les sommets des dernier (16') et avant-dernier (16) listels; des moyens pour commander des déplacements coordonnés de rétraction des butées de fin de course (22) vers leur position inactive, et d'avancement des pointes (24), cells-ci-venant alors s'insérer entre les dernier (16') et avant-dernier listels (16) jusqu'à obtenir la séparation du dernier listel (16') de la pile, tout en assurant le soutènement du reste de cette pile; des moyens pour commander des mouvements coordonnés de retour des butées (22) et des pointes (24) dans leurs positions active et inactive respectivement, et des moyens pour le prélèvement du listel (16') ainsi détaché et son acheminement vers des traitements ultérieurs.

2. Appareil selon la revendication 1, caractérisé en ce que lesdites moyens de commande des mouvements des pointes et des butées, effectuent, en succession, une course limitée d'insertion partielle de l'extrémité des pointes (24) entre les listels (16, 16'); une rétraction à fond des butées (22), et une course de insertion à fond de la partie conique des pointes entre les listels.

3. Appareil selon la revendication 2, caractérisé en ce que les mouvements des pointes (24) sont coordonnés aux mouvements des butées (22) par l'entremise d'un dispositif utilisant une came (30) et un suiveur de came (34).

4. Appareil selon la revendication 3, caractérisé en ce que chaque came (30) a un profil (32) qui présente une première rampe ou partie ascendente (52) pour commander l'insertion partielle de la pointe (24) respective; un palier (54) de maintien en position de la pointe au cours de la rétraction des butées; et une seconde rampe (56) commandant l'insertion à fond ou finale de la pointe (24).

5. Appareil selon la revendication 4, caractérisé en ce que le mouvement relatif entre la came (30) et le suiveur de came (34) est imprimé à chaque came (30) qui est solidaire, dans ses déplacements, des butées (22) de fin de course.

6. Appareil selon la revendication 5, caractérisé en ce qu'il comprend un moyen unique de commande des mouvements alternatifs des butées (22) de fin de course, d'ou sont dérivés les mouvements des autres constituant effectuant la séparation de chaque listel (16') et son transfert sur les moyens d'acheminement.

7. Appareil selon la revendication 1, caractérisé en ce que lesdites butées de fin de course (22) sont constituées par une paire de barrettes (22) agissant à proximité des extrémitées du listel (16').

8. Appareil selon la revendication 1, caractérisé en ce que le magasin est formé d'une paire de glissières paralléles (12), espacées, se situant selon un plan incliné par rapport à la verticale.

9. Appareil selon la revendication 8, caractérisé en ce qu'il comprend, á proximité des extremités des listels, une couple de doigts (72) qui sont controllablement actionnés pour pousser ledit dernier listel contre un côté posterieur desdites glissières (12), avant chaque insertion des pointes (24), de façon à exactement aligner les pointes (24) et les creux entre le dernier (16') et l'avant-dernier (16) listels dans une direction essentiellement horizontale.

10. Appareil selon la revendication 9, caractérisé en ce que un au moins des éléments constituant chacune desdites paires de glissières (12) guidant les listels, des doigts (72), des butées (22) des pointes (24) et des moyens de commande des pointes, est réglable en position longitudinalement aux listels.

11. Appareil selon la revendication 1, caractérisé en ce que les moyens de prélèvement et d'acheminement du listel séparé, comprennent un logement (58) de réception due listel (16'); une bande transporteuse (68) ou dispositif analogue pour l'acheminement du listel vers des traitements ultérieurs, et des moyens de commande pour amener alternativement ledit logement de la position de réception du listel à la position d'acheminement sur la bande transporteuse (68).

12. Appareil selon la revendication 11, caractérisé en ce que ledit logement (58) de réception est formé par une paire de barres (60, 62) espacées, délimitant entre elles une fente dans laquelle le listel détaché vient tomber, ledit logement étant prálléle au listel.

13. Appareil selon la revendication 12, caractérisé en ce que les barres (60, 62) présentent des faces délimitant la fente qui sont inclinées, par rapport à la verticale, de haut en bas dans la direction correspondante au sens désiré d'orientation du listel à acheminer.

14. Appareil selon la revendication 11, caractérisé en ce que la bande transporteuse (68) ou dispositif analogue se déplace parallélement au logement, et en ce que le logement présente, à son extrémité d'aval, par rapport au sens de déplacement de la bande transporteuse (68), une ouverture formant passage pour le prélèvement du listel (16').

15. Appareil selon les revendications 6 et 11, caractérisé en ce que les moyens de déplacement du logement (58) sont des moyens de liaison avec les commandes de fin de course, ces moyens déterminant des déplacements du logement (58) en direction perpendiculaire aux listels (16').

16. Appareil selon la revendication 11, caractérisé en ce que ladite bande transporteuse (68) est reliée, en aval, avec une machine affectuée à la fermeture des listels, machine à laquelle la commande de l'appareil est asservie, et qui comporte au moins un arrêt pour la retenue du listel qui lui est délivré chaque fois dans la position prévue de fermeture.

## Claims

1. Device for first separating from a stack and then feeding V-shaped metallic strips, particularly intended for use in assembling or packaging printed sheets or the like, characterized in that said device comprises: a magazine (12) for receiving a pack or stack of strips (16) inserted one within another and arranged with the V-apex pointing downwardly; one or more limit stops (22) for supporting said strip stack through the lowermost strip (16'): a pair of conical pins (24) located lengthwise said strips (16) and facing the ends thereof, the axis of which is substantially coincident with the space between the apexes of the lowermost strip (16') and the lowermost but one strip (16) actuating means for the coordinately retracting said limit stops towards an inoperative position thereof and advancing said conical pins (24) so that the latter will penetrate between the lowermost (16') and the lowermost but one (16) strips until the separation of the lowermost strip of the stack is attained, while ensuring the support of the remainder stack; actuating means for coordinately returning said limit stops (22) and conical pins (24) to their operative and inoperative positions, respectively, and means for picking up the so separated strip and for transporting it to further treatment stations.

2. Device according to Claim 1, characterized in that said actuating means for moving said conical pins and said limit stops cause in sequence a limited stroke of partial insertion of the end of said conical pins (24) between said strips (16, 16'); a fully retraction stroke of said limit stops (22) and a fully insertion stroke of the conical portion of said pins between said strips.

3. Device according to Claim 2, characterized in that the movements of said conical pins (24) are coordinated to the movements of the limit stops (22) through a device using a cam (30) and a cam follower (34).

4. Device according to claim 3, characterized in that each cam (30) is contoured (32) so as to present a first ramp or raising portion (52) for causing the partial insertion of the respective conical pin (24): a land portion (54) for keeping in position said conical pin during the retraction movement of said limit stops and a second ramp (56) causing the fully insertion of the conical pin (24).

5. Device according to claim 4, characterized in that the relative movement between said cam (30) and said cam follower (34) is imparted to each cam (30) which in its movements is coupled to said limit stops (22).

6. Device according to claim 5, characterized in that it comprises a single actuating means for the reciprocating movements of said limit stops (22), from which the movements of the other components causing the separation of each strip (16') and its transfer on the transporting means are derived.

7. Device according to claim 1, characterized in that said limit stops (22) are formed of a pair of bars (22) acting close the ends of the strip (16').

8. Device according to claim 1, characterized in that said magazine is formed of a pair of spaced parallel slide guides (12), arranged in an inclined plane with respect to the vertical.

9. Device according to claim 8, characterized in that it comprises a pair of fingers (72) which are arranged close the trip ends and controllably actuated to push the lowermost strip against a rear side of said slide guides (12) before each insertion of said conical pins (24) so as to exactly aligne said conical pins (24) and said spaces between the lowermost (16') and the lowermost but one (16') strips in a substantially horizontal direction.

10. Device according to claim 9, characterized in that at least one of the elements forming said pairs of slide guides (12) for the strips, the fingers (72), the limit stops (22), the conical pins (24) and the pin actuating means is positionable longitudinally to the strips.

11. Device according to claim 1, characterized in that said pick-up and transport means of the separated strip comprise a strip (16') receiving housing (58); a belt conveyor (68) or the like for transporting the strip towards further treatment stations and actuating means for moving alternatively said strip receiving housing from the strip receiving position to the transfer position on the belt conveyor (68).

12. Device according to claim 11, characterized in that said strip receiving housing (58) is formed of a pair of spaced bars (60, 62) defining therebetween a slot in which the separated strip will drop, said housing being parallel to the strip.

13. Device according to claim 12, characterized in that said bars (60, 62) are provided with slot defining surfaces which are inclined with respect to the vertical from the top to the bottom in the direction corresponding to the desired positioning direction of the strip to be transported.

14. Device according to claim 11, characterized in that said belt conveyor (68) or the like moves parallel to said housing and in that said housing is provided at its downstream end with respect to the transport direction of the belt conveyor (68) with an opening forming a passage for picking up the strip (16').

15. Device according to claims 6 and 11, characterized in that said housing transport means are formed of connecting means with the limit stop actuating means, said means causing movements of the housing (58) in a direction perpendicular to the strips (16').

16. Device according to claim 11, characterized in that said belt conveyor (68) is connected downstream with a strip closing machine, to which the device actuating means is interlocked and which comprises at least a stop element for retaining the strip which is fed everytime thereto in the closure position.

## Patentansprüche

1. Vorrichtung zum Vereinzeln und Zuführen von V-förmigen Metallschienen, die zum Zusammenfügen oder Verpacken von Drucksachen oder ähnl. geeignet sind, dadurch gekennzeichnet, dass sie ein Magazin (12) zur Entnahme eines Paketes oder Stepels von ineinander gesteckten und mit dem nach unten gerichteten Scheitel angeordneten Schienen (16); einen oder mehrere die Abstützung des Stapels durch die letzte Schiene (16') sicherstellende Endanschläge (22); zwei in Schienenlängsrichtung sich erstreckende und gegenüber den Schienenenden angeordnete Kegelstifte (24), deren Achse im wesentlichen mit dem zwischen den Scheiteln der letzten (16') und vorletzten (16) Schiene vorliegenden Raum zusammenfällt; Antriebsmittel zum Bewirken der abgestimmten Rückwärtsbewegungen der Endanschläge (22) in die unwirksame Stellung und der abgestimmten Vorwärtsbewegungen der Kegelstifte (24), wobei diese zwischen die letzte (16') und vorletzte (16) Schiene bis das Vereinzeln der letzten Schiene mit gleichzeitiger Abstützung des übrigen Stapels erreicht wird, eingesetzt werden; Antriebsmittel zum Bewirken der Rückwärtsbewegungen der Endanschläge (22) und Kegelstifte (24) in die wirksame, bzw; unwirksame Stellung und Mittel zur Entnahme der so getrennten Schiene (16') und zur Zuführung derselben in weitere Behandlungsstellen, enthält.

2. Vorrichtung nach Anspruch 1, dadurch gekennzeichnet, dass die Entriebsmittel zum Bewirken der Kegelstift-und Endanschagbewegungen einen begrenzten Teilvorlauf des Kegelstiftendes zwischen die Schienen (16, 16') einen vollständigen Rücklauf der Endanschläge (22) und einen vollständigen Vorlauf des Kegelteils der Stifte zwischen die Schienen, durchführen.

3. Vorrichtung nach Anspruch 2, dadurch gekennzeichnet, dass die Bewegungen der Kegelstifte (24) über eine aus einem Nocken (30) und einem Stössel (34) bestehende Vorrichtung mit den Bewegungen der Endanschläge (22) abgestimmt sind.

4. Vorrichtung nach Anspruch 3, dadurch gekennzeichnet, dass jeder Nocken ein Profil besitzt, das einen ersten steigenden Teil (52), der den Teilvorlauf des zugeordneten Kegelstiftes bewirkt, einen ebenen Teil, der den Kegelstift während des Rücklaufs der Endanschläge in ihrer Stellung hält und einen zweiten steigenden Teil (56), der den vollständigen Vorlauf des Kegelstiftes (24) bewirkt, aufweist.

5. Vorrichtung nach Anspruch 4; dadurch gekennzeichnet, dass die Relativbewegung zwischen den Nocken (30) und den Stössel (34) jedem Nocken, der in seiner Bewegung fest an den Endanschlägen ist, erteilt wird.

6. Vorrichtung nach Anspruch 5, dadurch gekennzeichnet, dass sie ein einziges, die Bewegungen der Endanschläge bewirkendes Mittel enthält, von welchem die Bewegungen der anderen Bestandteile abgeleitet werden, die das Vereinzeln jeder Schiene (16') und ihre Übertragung auf die Zuführmittel, durchführen.

7. Vorrichtung nach Anspruch 1, dadurch gekennzeichnet, dass die Endanschläge aus zwei, in der Nähe der Schienenden wirkenden Stangen (22), bestehen.

8. Vorrichtung nach Anspruch 1, dadurch gekennzeichnet, dass das Magazin aus zwei im Abstand sich parallel verlaufenden und in einer geneigten Ebene zur Lotrechte angeordneten Führungen (12) besteht.

9. Vorrichtung nach Anspruch 8, dadurch gekennzeichnet, dass sie zwei in der Nähe der Schienenenden angeordnete Finger (72) enthält, die zum Schieben der letzten Schiene gegen eine hintere Seite der Führungen (12) for jedem Einstecken der Kegelstifte (24) angetrieben werden, so dass die Kegelstifte (24) und die Räume zwischen der letzten (16') und vorletzten Schiene (16) in einer wesentlich waagerechten Richtung ausgerichtet werden.

10. Vorrichtung nach Anspruch 9, dadurch gekennzeichnet, dass wenigstens eine Schienenführung (12), ein Finger (72), ein Endanschlag (22) ein Kegelstift (24) und ein Kegelstiftantriebsmittel in Schienenlängsrichtung positionierbar ist.

11. Vorrichtung nach Anspruch 1, dadurch gekennzeichnet, dass die Mittel zur Entnahme und Zuführung der getrennten Schiene ein Aufnahmegehäuse der Schiene (16), ein Förderband oder ähnl.zur Zuführung der Schiene in weitere Behandlungsstellen und Antriebsmittel zur alternierenden Bewegung des Gehäuses von der Aufnahmestellung bis zur Zuführstellung über das Förderband, enthalten.

12. Vorrichtung nach Anspruch 11, dadurch gekennzeichnet, dass das Aufnahmegehäuse (58) aus zwei in Abstand angeordneten Stangen (60, 62) besteht, die miteinander einen Schlitz bilden, in den die so getrennte Schiene fällt, wobei das Gehäuse parallel zur Schiene angeordnet ist.

13. Vorrichtung nach Anspruch 12, dadurch gekennzeichnet, dass die Stangen den Schlitz bildende Flächen aufweisen, die zur Lotrechte von oben nach unten in einer Richtung geneigt sind, die der Schwenkrichtung der zuzuführenden Schiene entspricht.

14. Vorrichtung nach Anspruch 11, dadurch gekennzeichnet, dass das Förderband oder ähnl. sich parallel zum Gehäuse bewegt und dass das Gehäuse an seinem hinteren Ende im Bezug auf die Bewegungsrichtung des Förderbandes eine Öffnung zur Entnahme der Schiene (16') aufweist.

15. Vorrichtung nach Ansprüchen 6 und 11, dadurch gekennzeichnet, dass die Verschiebungsmittel des Gehäuses (58) Mittel, die mit den Endanschlagantriebsmitteln in Verbindung stehen, sind, wobei diese Mittel Bewegungen des Gehäuses auswirken, die senkrecht zu den Schienen verlaufen.

16. Vorrichtung nach Anspruch 11, dadurch gekennzeichnet, dass das Förderband an einer zum Schliessen der Schienen bestimmten, mit dem Vorrichtungsantrieb, verbundenen Maschine, angeschlossen ist, wobei diese Maschine wenistens einen Anschlag zum Halten der jeweiligen zugeführten Schiene in der Schliessstellung enthält.

0 010 528

Fig.1

Fig.3

Fig.2

1

**0010528**

Fig.4

Fig.5

Fig.6

Fig.7

Fig.9

Fig.8